# EUROPEAN PATENT APPLICATION

(11) **EP 2 124 281 A1**
(43) Date of publication of application: **25.11.2009**
(21) Application number: 08721697.4
(22) Date of filing: 10.03.2008
(51) Int. Cl.: H01M 8/04, H01M 8/02, H01M 8/10

(54) **FUEL CELL, ELECTRONIC DEVICE, FUEL FEEDING PLATE, AND FUEL FEEDING METHOD**

(30) Priority: 12.03.2007 JP 2007061693
(71) Applicant: Sony Corporation, Tokyo 108-0075 (JP)
(72) Inventor: SHIMURA, Jusuke, Tokyo 108-0075 (JP)
(74) Representative: Müller - Hoffmann & Partner
(86) International application number: PCT/JP2008/054281
(87) International publication number: WO 2008/126546

(57) **Abstract**

A fuel cell capable of uniformly supplying a fuel to a plurality of power generation sections, an electronic device, a fuel supply plate, and a fuel supply method are provided. A liquid fuel from a fuel tank is supplied to an inlet IL of a fuel diffusion plate 3, from which the liquid fuel is moved to 6 outlets OL through flow paths 3A to 3F, and the liquid fuel is supplied to each power generation section. At least one of the flow paths 3A to 3F includes curved lines CA to CF, preferably includes a circular arc, and the curvature radius of the curved line or the like is adjusted, and thereby each distance of the flow paths 3A to 3F becomes equal to each other. Whether a linear distance between the inlet IL and the plurality of outlets OL is long or short, an almost equal amount of the liquid fuel reaches the plurality of outlets OL almost at the same time, and is supplied to each power generation section. The flow paths 3A to 3F are preferably formed in a direction from the inlet IL toward apexes of an N-polygon (n is the number of the flow paths 3A to 3F) centering on the inlet IL, and are more preferably toward apexes of a regular n-polygon.

## Description

### TECHNICAL FIELD

The present invention relates to a fuel cell in which power generation is operated by reaction between methanol and oxygen, an electronic device including such a fuel cell, a fuel supply plate used for such a fuel cell, and a fuel supply method.

### BACKGROUND ART

In the case where a battery is used as an electric source, it is often the case that in order to obtain a voltage necessary for a load, the necessary number of unit cells are connected in series to obtain a high voltage. In particular, in a fuel cell, the power generation voltage per unit cell is low, and thus in general, a plurality of unit cells (power generation sections) are connected in series to configure a battery system.

In such a battery system, in general, the plurality of unit cells are vertically layered with a current collector plate in between. Further, on both faces or a single face of the current collector plate, a flow path to supply a fuel or air to the battery cells is provided (for example, refer to Patent Document 1).
Patent Document 1: Japanese Unexamined Patent Application Publication No. 2004-140153

### DISCLOSURE OF INVENTION

In the case where a plurality of unit cells are arranged in the in-plane direction, however, a distance between an outlet of a fuel supply pump and each unit cell is different from each other, and thus variation in a fuel amount supplied to each unit cell is generated. Therefore, variation in electromotive force of each unit cell is generated, and the output of the whole battery system is largely decreased. Further, according to a battery system structure, it is often the case that a position of the outlet of the fuel supply pump is not able to be changed freely, and thus it is extremely difficult to supply an equal amount of fuel to each unit cell.

In view of the foregoing problems, it is an object of the present invention to provide a fuel cell capable of uniformly supplying a fuel to a plurality of power generation sections, an electronic device, a fuel supply plate, and a fuel supply method.

A fuel cell of the present invention includes a fuel cell unit including a plurality of power generation sections, a fuel tank containing a liquid fuel, and a fuel supply plate having a plurality of flow paths between an inlet to which the liquid fuel is supplied from the fuel tank and a plurality of outlets corresponding to each of the plurality of power generation sections, in which at least one of the plurality of flow paths includes a curved line and each distance of the plurality of flow paths is equal to each other. "Each distance of the plurality of flow paths is equal to each other" herein means that each distance between the inlet and the outlet of the plurality of flow paths is equal to each other.

An electronic device of the present invention includes a fuel cell of the present invention.

A fuel supply plate of the present invention is intended to supply a liquid fuel contained in a fuel tank to a plurality of power generation sections. The fuel supply plate includes an inlet to which the liquid fuel is supplied from the fuel tank, a plurality of outlets corresponding to each of the plurality of power generation sections, and a plurality of flow paths that are formed between the inlet and the plurality of outlets, in which at least one of the plurality of flow paths includes a curved line and each distance of the plurality of flow paths is equal to each other.

A fuel supply method of the present invention is a method for supplying a liquid fuel contained in a fuel tank to a plurality of power generation sections. In the fuel supply method, the liquid fuel is supplied to an inlet of a fuel supply plate, the liquid fuel is moved to a plurality of outlets through a plurality of flow paths in which at least one of the plurality of flow paths includes a curved line and each distance of the plurality of flow paths is equal to each other, and the liquid fuel is supplied to the power generation sections corresponding to each of the plurality of outlets.

In the fuel cell, the electronic device, and the fuel supply plate of the present invention, the liquid fuel contained in the fuel tank is supplied to the inlet of the fuel supply plate, from which the liquid fuel is moved to the plurality of outlets through the plurality of flow paths, and the liquid fuel is supplied to each power generation section corresponding to each outlet. As least one of the plurality of flow paths includes a curved line. By adjusting the shape and the curve degree (curvature radius) of the curved line, each distance of the plurality of flow paths is equal to each other. Therefore, whether a linear distance between the inlet and the plurality of outlets is long or short, an almost equal amount of the liquid fuel reaches the plurality of outlets almost at the same time, and is supplied to each power generation section.

According to the fuel cell, the electronic device, or the fuel supply plate of the present invention, the inlet to which the liquid fuel is supplied from the fuel tank is connected to the plurality of outlets respectively corresponding to the plurality of power generation sections by the plurality of flow paths, at least one of the plurality of flow paths includes a curved line, and each distance of the plurality of flow paths is equal to each other. Thus, the liquid fuel can be uniformly supplied to the plurality of power generation sections. Therefore, variation in electromotive force of the plurality of power generation sections due to variation in fuel supply amounts is decreased, and the output of the whole fuel cell can be improved.

According to the fuel supply method of the present invention, the liquid fuel contained in the fuel tank is supplied to the inlet of the fuel supply plate, from which the liquid fuel is moved to the plurality of outlets through the plurality of flow paths in which at least one of the plurality of flow paths includes a curved line and each distance of the plurality of flow paths is equal to each other, and the liquid fuel is supplied to each corresponding power generation section. Thus, the liquid fuel can be uniformly supplied to the plurality of power generation sections. Therefore, variation in electromotive force of the plurality of power generation sections due to variation in fuel supply amounts is decreased, and the output of the whole fuel cell can be improved.

### BRIEF DESCRIPTION OF DRAWINGS

[Fig. 1] Fig. 1 is a cross sectional view illustrating a structure of a fuel cell according to an embodiment of the present invention.
[Fig. 2] Fig. 2 is a plan view illustrating a structure viewed from the fuel cell unit side of the fuel cell illustrated in Fig. 1.
[Fig. 3] Fig. 3 is a plan view illustrating a structure viewed from the fuel cell unit side of the fuel supply plate illustrated in Fig. 1.
[Fig. 4] Fig. 4 is a plan view illustrating another structure of the fuel supply plate illustrated in Fig. 3.
[Fig. 5] Fig. 5 is an exploded perspective view illustrating a structure of the fuel supply plate illustrated in Fig. 3.
[Fig. 6] Fig. 6 is a view illustrating a fluid simulation result in the fuel supply plate having the flow path structure illustrated in Fig. 3.
[Fig. 7] Fig. 7 is a view illustrating a fluid simulation result in another flow path structural example.

### BEST MODE(S) FOR CARRYING OUT THE INVENTION

An embodiment of the present invention will be hereinafter described in detail with reference to the drawings.

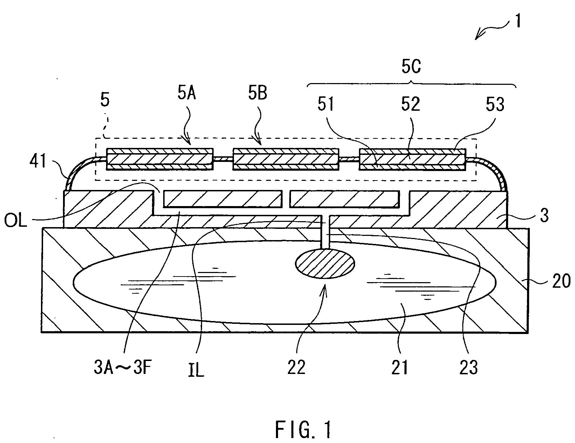

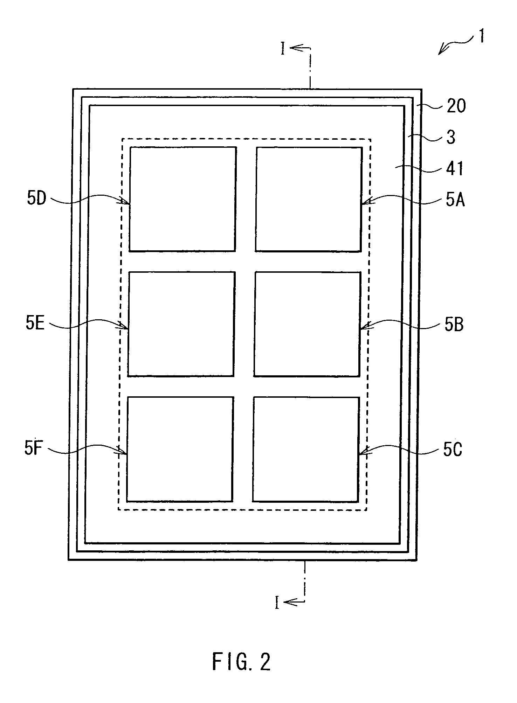

Fig. 1 illustrates a cross sectional structure of a fuel cell (fuel cell 1) according to an embodiment of the present invention. Fig. 2 illustrates a structure viewed from the fuel cell unit side of the fuel cell 1 illustrated in Fig. 1. In addition, a fuel supply method of the present invention is embodied by the fuel cell according to this embodiment, and thus a description thereof will be hereinafter given as well.

The fuel cell 1 is provided with a fuel tank 20 containing a liquid fuel (for example, methanol water) 21. Above the fuel tank 20, a fuel cell unit 5 is provided. The fuel cell unit 5 includes a plurality of (for example, 6) battery cells 5A to 5F arranged in the horizontal direction. The fuel tank 20 is composed of, for example, a container (for example, plastic bag) in which volume changes without entry of air bubbles or the like therein even if the liquid fuel 21 is increased or decreased and a rectangular solid case (structure) covering the container.

The respective battery cells 5A to 5F are direct methanol power generation sections in which power generation is operated by reaction between methanol and oxygen. A fuel electrode (anode electrode, anode) 51 and an oxygen electrode (cathode electrode, cathode) 53 are oppositely arranged with an electrolyte film 52 in between. An air supply pump (not illustrated) is connected to the oxygen electrode 53. The fuel electrode 51 is formed on the fuel tank 20 side of the battery cells 5A to 5F. The electrolyte film 52 is composed of, for example, a proton conductor.

In the fuel tank 20, a fuel supply pump 22 for suctioning the liquid fuel in the fuel tank 20 and discharging the liquid fuel from the nozzle 23 is provided. Between the fuel tank 20 and the battery cells 5A to 5F, specifically, on the top face of the fuel tank 20, a fuel supply plate 3 for supplying the liquid fuel 21 discharged from the nozzle 23 to the battery cells 5A to 5F is provided. Between each of the battery cells 5A to 5F and between the battery cells 5A to 5F and the fuel supply plate 3, a fuel leakage prevention section 41 is provided, and thereby leakage of the liquid fuel 21 can be prevented.

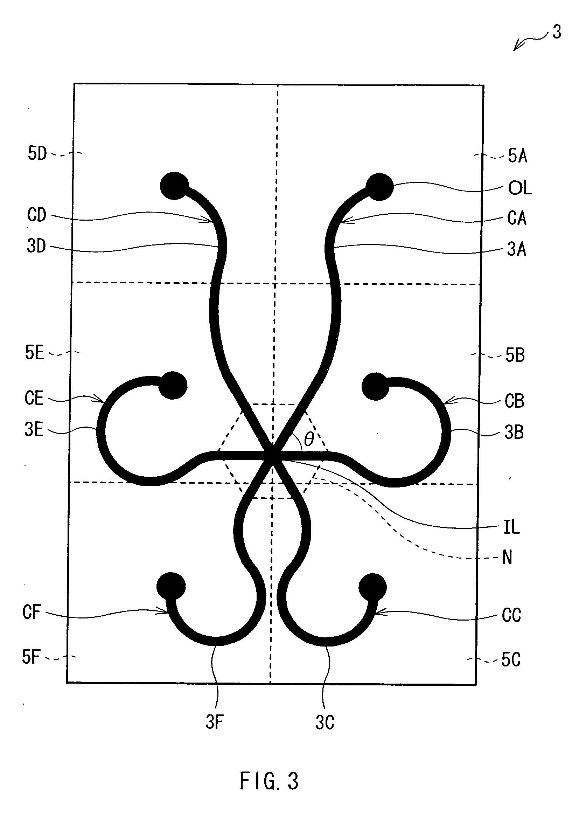

Fig. 3 illustrates an example of a structure viewed from the fuel cell unit 5 side of the fuel supply plate 3. The fuel supply plate 3 has an inlet IL to which the liquid fuel 21 is supplied from the fuel tank 20 and 6 outlets OL respectively corresponding to the battery cells 5A to 5F. Between the inlet IL and the outlets OL, 6 flow paths 3A to 3F are formed. The flow paths 3A to 3F are intended to separate and move the liquid fuel 21 from the inlet IL to the 6 outlets OL. The dimensions such as the width and the depth are appropriately set according to a transportation method of the liquid fuel 21 (for example, a method using a pump or capillary phenomenon). It is enough that each outlet OL is opened toward the battery cells 5A to 5F, and it is not necessary that each outlet OL is connected to the battery cells 5A to 5F.

The flow paths 3A to 3F respectively include curved lines CA to CF, and each distance thereof is equal to each other. Thereby, in the fuel cell 1, the liquid fuel 21 can be uniformly supplied to the battery cells 5A to 5F. The flow paths 3A to 3F may be composed of only the curved line, but the flow paths 3A to 3F may include a straight line in a section immediately after the separating point in the vicinity of the inlet IL, for example, according to needs.

The curved lines CA to CF are intended to realize a structure in which each distance between the inlet IL and the outlet OL of the flow paths 3A to 3F is equal to each other by adjusting the shape and the curve degree (curvature radius). The inlet IL is determined by the position of the outlet of the nozzle 23 of the fuel supply pump 22. For example, as illustrated in Fig. 3, the inlet IL may be shifted from the center of the fuel supply plate 3. The outlet OL is determined by the shape, the dimensions, the arrangement, the spacing and the like of the battery cells 5A to 5F. In general, the battery cells 5A to 5F are rectangle, and the outlet OL is provided in the center of the respective battery cells 5A to 5C. It is difficult to freely change positions of the inlet IL and the outlet OL.

The flow paths 3A to 3F preferably include a circular arc as the curved lines CA to CF, since the length of the circular arc is easily calculated, resulting in easy drafting and processing. Fig. 3 illustrates a case that the flow paths 3A to 3F include a circular arc and a straight line. However, the shape of the curved lines CA to CF is not particularly limited, and may be other curved line such as an ellipse and Bezier curve in addition to a circular arc.

The curvature radius of the curved lines CA to CF is desirably as large as possible, since thereby the flow is not complicated, and structural determination by complicated fluid simulation can be avoided.

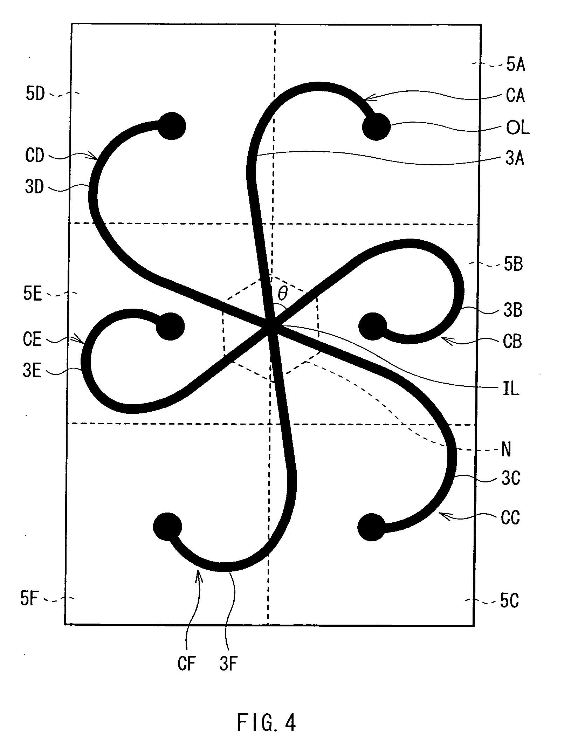

Each distance of the flow paths 3A to 3F is equal to each other irrespective of the position of the inlet IL. Fig. 4 illustrates an example of the flow paths 3A to 3F in the case where the inlet IL corresponds with the center of the fuel supply plate 3. In the flow paths 3A to 3F illustrated in Fig. 4, the curve degree (curvature radius) of the curved lines CA to CF is different from that illustrated in Fig. 3, but each distance of the flow paths 3A to 3F is equal to each other.

As illustrated in Fig. 3 or Fig. 4, such flow paths 3A to 3F are preferably formed in a direction from the inlet IL toward apexes of an N-polygon (n is the number of the flow paths 3A to 3F, and is 6 in this embodiment) centering on the inlet IL. If the flow paths 3A to 3F are not separated straightly from the inlet IL but are separated on the way, it becomes difficult to simply geometrically design the flow paths 3A to 3F so that the liquid fuel 21 is divided equally due to influence of flow inertia.

Further, the N-polygon is more preferably a regular n-polygon (in this embodiment, a regular hexagon), since thereby the liquid fuel 21 can be evenly separated into the flow paths 3A to 3F. "Regular n-polygon" herein includes not only a regular n-polygon that is geometrically perfect, but also includes an n-polygon having symmetry property with a degree of an almost regular n-polygon in consideration of processing accuracy of the flow paths 3A to 3F or the like. That is, it is enough that the flow paths 3A to 3F are arranged so that an angle θ made by straight line sections immediately after the separating point of adjacent 2 flow paths is larger than 360/(n+1) and is smaller than 360/(n-1).

In addition, the flow paths 3A to 3F preferably do not have an angle, since the angle may significantly disturb flow whether an acute angle or an obtuse angle.

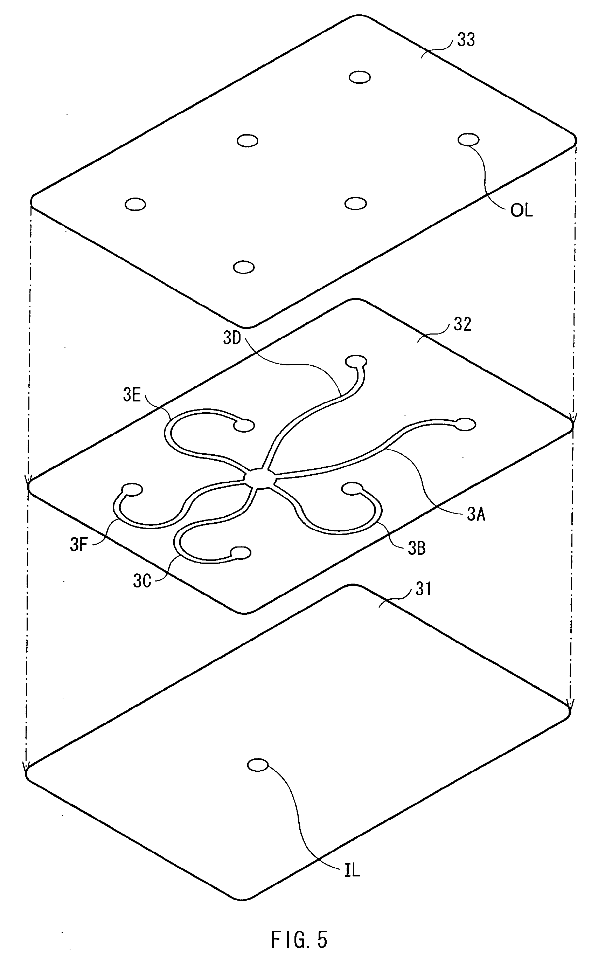

Fig. 5 illustrates an example of a specific structure of the fuel supply plate 3. The fuel supply plate 3 can have a structure in which, for example, a tank-side supply plate 31 formed with the inlet IL, a flow path plate 32 formed with the flow paths 3A to 3F, and a cell-side supply plate 33 provided with 6 outlets OL are layered in the order from the fuel tank 20 side.

The tank-side supply plate 31 is made of, for example, a metal plate such as stainless steel being about 0.3 mm thick, and also has a function to secure the strength of the fuel supply plate 3. The diameter of the inlet IL is, for example, about 1 mm.

The flow path plate 32 is, for example, about 50 µm thick, and is made of a double-faced adhesive sheet composed of maleic acid modified polypropylene. The flow path plate 32 is provided with cutout corresponding to the outer shape of the flow paths 3A to 3F. In the vicinity of the inlet IL of the flow paths 3A to 3F, as a fuel pool, cutout wider than the inlet IL may be provided.

The cell-side supply plate 33 is, for example, about 0.1 mm thick, and is made of a metal plate such as stainless steel.

Further, the cell-side supply plate 33 is provided with 6 through holes as the outlet OL. By providing the cell-side supply plate 33 separately from the flow path plate 32, the diameter of the outlet OL is reduced to be smaller than the width of the flow paths 3A to 3F, and the outlet OL can be made to have a pressure adjustment function of the liquid fuel 21. That is, by providing the outlet OL being narrower than the flow paths 3A to 3F, pressure loss is generated (pressure reduction function), and the liquid fuel 21 can be always discharged from the outlet OL at a constant pressure (pressure adjustment function). Further, in this case, if the fuel cell 1 is tilted, the liquid fuel 21 can be discharged from the outlet OL without being influenced by gravity. To this end, the diameter of the outlet OL is desirably as small as possible, and is desirably, for example, equal to or less than 1 mm, and is more desirably about 0.3 mm. Instead of decreasing the size of the outlet OL, it is possible to obtain similar pressure adjustment function by decreasing the width of the flow paths 3A to 3B on the way, decreasing the thickness of the double-faced adhesive sheet, or providing a pressure valve (not illustrated) or the like in the outlet OL.

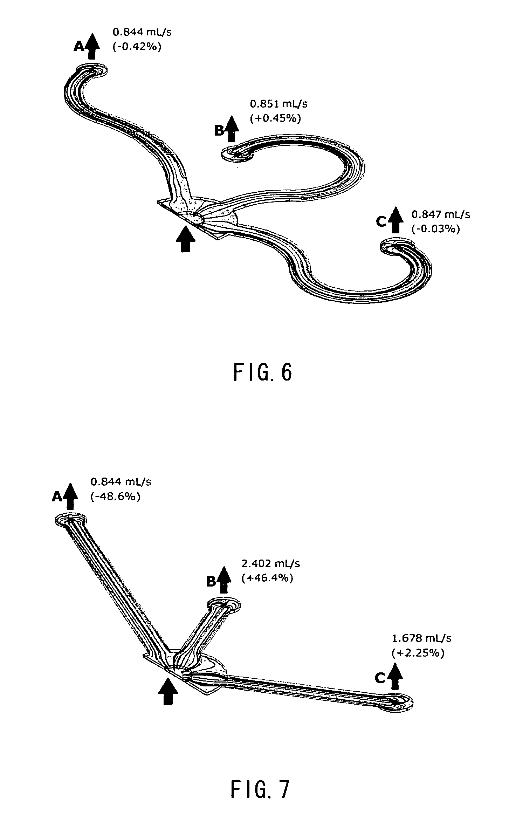

Fig. 6 illustrates a fluid simulation result in the case that the flow paths 3A to 3F are formed as illustrated in Fig. 3, and is a modeling of a structure of only one-half thereof in consideration of a plane of symmetry. In Fig. 6, each fuel discharge rate from flow paths A to C is 0.844 mL/s, 0.851 mL/s, and 0.847 mL/s, respectively. Each deviation from the average of the three fuel discharge rates is -0.42%, +0.45%, and -0.03%, respectively. In Fig. 6, a color (contrasting density) of wall faces of the flow paths A to C represents a pressure applied to the wall faces. As the color shifts from warm color (subtle color) to cold color (deep color), the pressure is lowered. In the vicinity of the inlet, the pressure is high by being affected by ejection pressure of the pump. In the vicinity of the outlet, the pressure is low being almost equal to the air pressure. Further, thin lines in the flow paths A to C represent the direction and the amount of flow. A section with a high density of the thin lines indicates a large flow rate, and a section with a low density of the thin lines indicates a small flow rate.

In the model, the flow paths A to C are filled with methanol, and the density and the viscosity indicate values of methanol. Actually used values of density and viscosity are 0.791 g/cm³ and 0.54 mPa.s. Further, the whole model is applied with volume force (gravity), and the value is 7.76 kN/m³ (value obtained by multiplying gravity acceleration by the density of methanol). As boundary conditions, the pressure of the inlet of methanol is 115 kPa (value obtained by adding pump lift to the atmosphere pressure), and the pressure of the outlet is 100 kPa (atmosphere pressure). All boundaries without entrance and exit of methanol are regarded as a glide plane. For calculation, incompressible Navier-Stokes equation is used and steady state linear solver is used to perform finite element calculation. As calculation conditions, the pump pressure is 15 kPa, the inlet IL is 2 mm in diameter, the outlet OL is 0.3 mm in diameter, the backpressure is uniform, the temperature is 30 deg C, and the installation direction is upward direction.

Fig. 7 illustrates a result of fluid simulation performed under the conditions similar to those of Fig. 6 in the case where the flow path is straight. In the same manner as that of Fig. 6, Fig. 7 is a modeling of a structure of only one-half thereof in consideration of a plane of symmetry. In Fig. 7, each fuel discharge rate from the flow paths A to C is 0.844 mL/s, 2.402 mL/s, and 1.678 mL/s. Each deviation from the average of the three fuel discharge rates is -48.6%, +46.4%, and +2.25%.

In comparing the result of Fig. 6 to the result of Fig. 7, it is found that in Fig. 6, the variation in the fuel discharge rate from the respective flow paths A to C is significantly suppressed compared to Fig. 7, and thus the flow path pattern in which each flow path has a distance equal to each other and includes the curved line as illustrated in Fig. 6 largely contributes to uniform ejection of the fuel.

The fuel cell 1 can be manufactured, for example, as follows.

First, the tank-side supply plate 31 and the cell-side supply plate 33 that have the foregoing thickness and are made of the foregoing material are prepared. A process using, for example, photo-etching or the like is provided, and thereby the inlet IL is formed in the tank-side supply plate 31 and the 6 outlets OL are formed in the cell-side supply plate 33.

Next, a punching process by using, for example, a pressing machine is provided and thereby a cutout corresponding to the shape of the flow paths 3A to 3F is provided in the flow path plate 32 that has, for example, the foregoing thickness and is made of the foregoing material. The tank-side supply plate 31 and the cell-side supply plate 33 are bonded to each other with the flow path plate 32 in between. Accordingly, the fuel supply plate 3 is formed.

Subsequently, the fuel supply plate 3 is placed on the fuel tank 20 to which the fuel supply pump 22 and the nozzle 23 are attached. After that, the fuel cell unit 5 and the fuel leakage prevention section 41 that are made of the foregoing material are provided on the fuel supply plate 3. Accordingly, the fuel cell 1 illustrated in Fig. 1 is manufactured.

With the use of the foregoing manufacturing method, the fuel supply plate 3 in which the tank-side supply plate 31 was made of a stainless steel plate being 0.3 mm thick, the flow path plate 32 was made of a double-faced adhesive sheet composed of maleic acid modified propylene being 50 µm thick, the cell-side supply plate 33 was made of a stainless steel plate being 0.1 mm thick, and the diameter of the outlet OL was 0.3 mm was actually formed. The obtained fuel supply plate 3 was bonded to the fuel supply pump 22, operation check test was performed, and the fuel ejection amount from the outlet OL of the cell-side supply plate 33 was visually checked. In the result, almost an equal amount of fuel was ejected from each outlet OL. Further, placement direction of the fuel supply pump 22 was changed and operation check test was performed similarly. In the result, whether the supply pump 22 was laid down with the face up or was stood, the ejection amount of the fuel was not changed much.

In the fuel cell 1, the liquid fuel 21 contained in the fuel tank 20 is supplied to the inlet IL of the fuel supply plate 3 by the fuel supply pump 22 and the nozzle 23, from which the liquid fuel is moved through the flow paths 3A to 3F to the outlet OL by the pressure of the fuel supply pump 22, and is evaporated. The evaporated fuel passes through a separation sheet 42 and reaches the respective battery cells 5A to 5C, and is respectively supplied to the fuel electrode 51. Meanwhile, by an air supply pump (not illustrated), air (oxygen) is supplied to the oxygen electrode 53 of the respective battery cells 5A to 5C. In the respective fuel electrodes 51, reaction is initiated and thereby hydrogen ions and electrons are generated. Further, the hydrogen ions are moved through the electrolyte film 52 to the oxygen electrode 53, is reacted with electrons and oxygen and thereby water is generated, and carbon dioxide is sub-generated. Accordingly, power generation operation in the fuel cell 1 is performed.

In this embodiment, the flow paths 3A to 3F respectively include the curved lines CA to CF, and each distance thereof is equal to each other. Thus, whether a linear distance between the inlet IL and the 6 outlets OL is long or short, an almost equal amount of the liquid fuel 21 reaches the outlet OL almost at the same time, and is evaporated. Therefore, the evaporated fuel is equally supplied to the battery cells 5A to 5F, variation in electromotive force of the fuel cells 5A to 5F is decreased, and the output of the whole fuel cell 1 is improved.

As described above, in this embodiment, the inlet IL is connected to the 6 outlets OL by the flow paths 3A to 3F that respectively include the curved lines CA to CF and that have a distance equal to each other, and the liquid fuel 21 is supplied through the flow paths 3A to 3F. Thus, the liquid fuel 21 can be uniformly supplied to the battery cells 5A to 5F. Therefore, variation in electromotive force of the battery cells 5A to 5F due to variation in fuel supply amounts is decreased, and the output of the whole fuel cell can be improved.

In particular, since the flow paths 3A to 3F include the circular arc as the curved lines CA to CF, drafting and processing can be facilitated.

Further, the flow paths 3A to 3F are formed in a direction from the inlet IL toward apexes of an N-polygon (n is the number of the flow paths 3A to 3F) centering on the inlet IL. Thus, the liquid fuel 21 can be evenly separated into the flow paths 3A to 3 F.

Further, since the N-polygon is a regular n-polygon, the liquid fuel 21 can be more evenly separated into the flow paths 3A to 3F.

In addition, since the flow paths 3A to 3F do not have an angle, possibility of disturbed flow of the liquid fuel 21 can be eliminated.

The present invention has been described with reference to the embodiment. However, the present invention is not limited to the foregoing embodiment, and various modifications may be made. For example, in the foregoing embodiment, the description has been specifically given of the case that the flow paths 3A to 3F respectively include the curved lines CA to CF. However, the all flow paths 3A to 3F do not necessarily include a curved line as long as each distance of the flow paths 3A to 3F is equal to each other. It is enough that at least one of the flow paths 3A to 3F includes a carved line.

Further, in the foregoing embodiment, the description has been specifically given of the structures of the fuel cell 1 and the fuel supply plate 3. However, the fuel cell 1 or the fuel supply plate 3 may have other structure or may be made of other material. For example, in the fuel supply plate 3, it is possible that the tank-side supply plate 31 is omitted, and only the flow path plate 32 and the cell-side supply plate 33 are provided. In this case, the inlet IL can be provided in the flow path plate 32. Further, the flow path plate 32 has a structure in which a thermal adhesive layer composed of polypropylene or the like is provided on both faces of a metal plate composed of aluminum (Al) or an alloy containing aluminum (Al), instead of the double-faced adhesive sheet. Further, for example, the description has been given of the case that the 6 battery cells 3A to 3F are arranged in 3 rows by 2 columns in the fuel cell 1. However, the number and the arrangement of the battery cells are not particularly limited, and can be changed as appropriate. For example, 8 battery cells may be arranged in 4 rows by 2 columns.

Further, for example, the material and the thickness of each element, power generation conditions of the fuel cell and the like are not limited to those described in the foregoing embodiment. Other material, other thickness, or other power generation conditions may be adopted.

In addition, for example, in the foregoing embodiment, the description has been given of the case that the liquid fuel 21 is evaporated, and the evaporated fuel is supplied to the battery cells 5A to 5F. However, the present invention is applicable to a case that a fuel in a state of liquid is supplied by being contacted with a fuel electrode.

Furthermore, in the foregoing embodiment, the fuel tank 20 is hermetically sealed, and the liquid fuel 21 is supplied according to needs. However, the fuel may be supplied from a fuel supply section (not illustrated) to the fuel electrode 51. Further, for example, the liquid fuel 21 may be other liquid fuel such as ethanol and dimethyl ether in addition to methanol.

In addition, the present invention is applicable to not only the fuel cell using the liquid fuel, but also a fuel cell using a material other than the liquid fuel such as hydrogen as a fuel.

The fuel cell of the present invention can be suitably used for a mobile electronic device such as a mobile phone, an electronic camera, an electronic databook, a notebook size personal computer, a camcoder, a portable game player, a portable videoplayer, a headphone stereo, and a PDA (Personal Digital Assistants).

## Claims

1. A fuel cell, **characterized by** comprising:
a fuel cell unit including a plurality of power generation sections;
a fuel tank containing a liquid fuel; and
a fuel supply plate having a plurality of flow paths between an inlet to which the liquid fuel is supplied from the fuel tank and a plurality of outlets corresponding to each of the plurality of power generation sections, in which at least one of the plurality of flow paths includes a curved line and each distance of the plurality of flow paths is equal to each other.

2. The fuel cell according to claim 1, **characterized in that** at least one of the plurality of flow paths includes a circular arc.

3. The fuel cell according to claim 1, **characterized in that** the plurality of flow paths are formed in a direction from the inlet toward apexes of an n-polygon (n is the number of the plurality of flow paths) centering on the inlet.

4. The fuel cell according to claim 3, **characterized in that** the n-polygon is a regular n-polygon.

5. The fuel cell according to claim 1, **characterized in that** the plurality of flow paths do not have an angle.

6. An electronic device including a fuel cell, **characterized in that** the fuel cell comprises:
a fuel cell unit including a plurality of power generation sections;
a fuel tank containing a liquid fuel; and
a fuel supply plate having a plurality of flow paths between an inlet to which the liquid fuel is supplied from the fuel tank and a plurality of outlets corresponding to each of the plurality of power generation sections, in which at least one of the plurality of flow paths includes a curved line and each distance of the plurality of flow paths is equal to each other.

7. A fuel supply plate for supplying a liquid fuel contained in a fuel tank to a plurality of power generation sections, **characterized in that** the fuel supply plate comprises:
an inlet to which the liquid fuel is supplied from the fuel tank;
a plurality of outlets corresponding to each of the plurality of power generation sections; and
a plurality of flow paths being formed between the inlet and the plurality of outlets, in which at least one of the plurality of flow paths includes a curved line and each distance of the plurality of flow paths is equal to each other.

8. The fuel supply plate according to claim 7, **characterized in that** at least one of the plurality of flow paths includes a circular arc.

9. The fuel supply plate according to claim 7, **characterized in that** the plurality of flow paths are formed in a direction from the inlet toward apexes of an n-polygon (n is the number of the plurality of flow paths) centering on the inlet.

10. The fuel supply plate according to claim 9, **characterized in that** the n-polygon is a regular n-polygon.

11. The fuel supply plate according to claim 7, **characterized in that** the plurality of flow paths do not have an angle.

12. A fuel supply method for supplying a liquid fuel contained in a fuel tank to a plurality of power generation sections, **characterized in that** the liquid fuel is supplied to an inlet of a fuel supply plate, the liquid fuel is moved to a plurality of outlets through a plurality of flow paths in which at least one of the plurality of flow paths includes a curved line and each distance of the plurality of flow paths is equal to each other, and the liquid fuel is supplied to the power generation sections corresponding to each of the plurality of outlets.
